# EUROPÄISCHE PATENTSCHRIFT

(11) **EP 1 365 948 B1**
(45) Veröffentlichungstag und Bekanntmachung des Hinweises auf die Patenterteilung: **22.04.2009**
(21) Anmeldenummer: 02722186.0
(22) Anmeldetag: 06.03.2002
(51) Int. Cl.: B60T 11/18, B60T 7/06, F16C 11/06

(54) **BREMSANLAGE UND KRAFTÜBERTRAGUNGSANORDNUNG HIERFÜR**
BRAKING SYSTEM AND FORCE TRANSMISSION ASSEMBLY THEREFOR
SYSTEME DE FREINAGE ET DISPOSITIF DE TRANSMISSION DE FORCE DESTINE A UN TEL SYSTEME DE FREINAGE

(30) Priorität: 07.03.2001 DE 10110931
(43) Veröffentlichungstag der Anmeldung: 03.12.2003
(73) Patentinhaber: Lucas Automotive GmbH, 56070 Koblenz (DE)
(72) Erfinder: KÖTH, Boris, 65843 Sulzbach (DE)
(74) Vertreter: Röthinger, Rainer
(86) Internationale Anmeldenummer: PCT/EP2002/002473
(87) Internationale Veröffentlichungsnummer: WO 2002/070314

(56) Entgegenhaltungen:
- WO-A-88/08801
- DE-A- 3 149 628
- DE-A- 19 843 316
- FR-A- 2 788 095

## Beschreibung

Die Erfindung betrifft eine Bremsanlage sowie eine Kraftübertragungsanordnung mit Gelenkfunktion insbesondere für diese Bremsanlage. Die Kraftübertragungsanordnung dient zur Aufnahme und Weiterleitung einer Pedalkraft und umfasst ein erstes Kraftübertragungsglied, welches eine Aufnahmehülse für ein zweites Kraftübertragungsglied aufweist, wobei ein in die Aufnahmehülse ragendes Ende des zweiten Kraftübertragungsglieds ein Schnappelement hintergreift, welches das zweite Kraftübertragungsglied gegen ein Herausziehen aus der Aufnahmehülse sichert.

Eine Bremsanlage mit einem derartigen Kraftübertragungsglied ist aus der DE 198 43 316 A1 bekannt. Die bekannte Kraftübertragungsanordnung umfasst ein erstes Kraftübertragungsglied in Gestalt eines Eingangsglieds, welches Bestandteil eines Hauptbremszylinders oder eines Bremskraftverstärkers ist. Das Eingangsglied besitzt an seinem dem Bremspedal zugewandten Ende eine Aufnahmehülse, in welche ein zweites Kraftübertragungsglied in Gestalt einer Betätigungsstange ragt. Das in die Aufnahmehülse ragende Ende der Betätigungsstange ist als Kugelkopf ausgebildet. Der Kugelkopf der Betätigungsstange wirkt mit einer in der Aufnahmehülse angeordneten Schnappeinrichtung in Gestalt einer Federhülse mit mehreren Federelementen zusammen.

Zur Kopplung der Betätigungsstange mit dem Eingangsglied wird die Betätigungsstange in die hülsenförmige Aufnahme eingeschoben. Dabei biegt der Kugelkopf die radial nach innen ragenden Federelemente der Federhülse radial nach außen. Sobald die Betätigungsstange vollständig in die hülsenförmige Aufnahme eingeschoben ist, können die Federelemente wieder zurückschnappen. Die zurückgeschnappten Federelemente hintergreifen den Kugelkopf und sichern damit die Betätigungsstange gegen ein Herausziehen aus der Aufnahmehülse. Die Federelemente ermöglichen somit eine dauerfeste Schnellverbindung zwischen dem Eingangsglied und der Betätigungsstange.

Zur Realisierung einer Gelenkfunktion ist das dem Bremspedal abgewandte Ende des Eingangsglieds als Gelenkkopf ausgebildet, welcher in einer Gelenkpfanne eines Kolbens des Bremskraftverstärkers oder des Hauptbremszylinders liegt. Diese Gelenkanordnung gestattet eine Winkelauslenkung des Eingangsglieds relativ zum Kolben, in welchem die Gelenkpfanne ausgebildet ist. Eine Winkelauslenkung des Eingangsglieds relativ zur Betätigungsstange wird hingegen dadurch unterbunden, dass der Innendurchmesser der einstückig mit dem Eingangsglied ausgebildeten Aufnahmehülse nur unwesentlich größer als der Außendurchmesser der Betätigungsstange ist. Mit anderen Worten: die Betätigungsstange ist bezüglich einer Winkelauslenkung im wesentlichen spielfrei innerhalb der Aufnahmehülse aufgenommen.

Aus verschiedenen Gründen wäre es wünschenswert, eine Winkelauslenkung des Betätigungskolbens innerhalb der Aufnahmehülse relativ zum Eingangsglied unter Aufrechterhaltung der Schnellverbindung zuzulassen. So könnte dann beispielsweise anstatt der dreiteiligen Ausgestaltung der Kraftübertragungsanordnung eine zweiteilige Bauweise gewählt werden. Auch ließe sich dadurch die Mindestbaulänge der Kraftübertragungsanordnung reduzieren.

Da gemäß der DE 198 43 316 A1 das in die Aufnahmehülse ragende Ende der Betätigungsstange bereits mit einem Kugelkopf versehen ist, welcher in einer am Grund der Aufnahmehülse ausgebildeten Gelenkpfanne liegt, könnte daran gedacht werden, ein Spiel zwischen dem Außendurchmesser der Betätigungsstange und dem Innendurchmesser der Aufnahmehülse vorzusehen. Die Betätigungsstange ließe sich dann innerhalb der Aufnahmehülse verschwenken. Nachteilig hierbei ist jedoch, dass die den Gelenkkopf hintergreifenden und direkt an diesem anliegenden Federelemente infolge von Schwenkbewegungen der Betätigungsstange fortdauernd Winkelauslenkungen erfahren, welche bereits nach kurzer Zeit zu einem Ermüdungsbruch der Federzungen führen würden.

Aus der US 5 163 773 ist eine weitere Kraftübertragungsanordnung mit Gelenkfunktion bekannt. Die bekannte Kraftübertragungsanordnung umfasst ein erstes Kraftübertragungsglied, welches eine Aufnahmehülse besitzt, in die ein Gelenkkopf eines zweiten Kraftübertragungsglieds eingeführt werden kann. Um ein Herausziehen des zweiten Kraftübertragungsglieds aus der Aufnahmehülse zu verhindern, ist eine den Gelenkkopf umgreifende Hülse vorgesehen, in welcher der Gelenkkopf schwenkbar gelagert ist und welche mittels eine Mehrzahl von Schnappelementen ortsfest im Inneren der Aufnahmehülse gelagert ist.

Der Erfindung liegt die Aufgabe zugrunde, eine betriebssichere Kraftübertragungsanordnung insbesondere für eine Bremsanlage zur Verfügung zu stellen, bei welcher ein erstes Kraftübertragungsglied schwenkbar und mittels einer Schnellverbindung mit einem zweiten Kraftübertragungsglied koppelbar ist.

Diese Aufgabe ist bei einer Kraftübertragungsanordnung der eingangs geschilderten Art dadurch gelöst, dass das Ende des zweiten Kraftübertragungsglieds, welches das Schnappelement hintergreift, ein Gelenkkopf ist, der innerhalb der Aufnahmehülse schwenkbar gelagert ist, wobei das zweite Kraftübertragungsglied mit einer Stützeinrichtung schwenkbar gekoppelt ist, an welcher sich die Schnappeinrichtung schwenkfest abstützt. Bei einer erfindungsgemäßen Bremsanlage kann ein erstes der beiden Kraftübertragungsglieder das Eingangsglied zur Betätigung einer Bremseinrichtung, beispielsweise einer Bremsdruckgebereinheit oder eines Bremskraftverstärkers, bilden und das zweite der beiden Kraftübertragungsglieder als eine mit dem Bremspedal zu koppelnde Betätigungsstange fungieren.

Bei der erfindungsgemäßen Kraftübertragungsanordnung verhindert die Stützeinrichtung, dass sich eine Schwenkbewegung des in der Aufnahmehülse angeordneten Kraftübertragungsglieds auf die Schnappeinrichtung, welche dieses Kraftübertragungsglied gegen ein Herausziehen sichert, überträgt. Die Schnappeinrichtung wird folglich mittels der Stützeinrichtung von Schwenkbewegungen des in der Aufnahmehülse angeordneten Kraftübertragungsglieds entkoppelt. Aufgrund dieser Entkopplung können Schwenkbewegungen zwischen den beiden Kraftübertragungsgliedern keine Ermüdungsbrüche bei der Schnappeinrichtung verursachen.

Vorzugsweise ist die Stützeinrichtung mit dem in der Aufnahmehülse angeordneten Kraftübertragungsglied zwar schwenkbar, aber in axialer Richtung unbeweglich verbunden. Nach dem Einführen dieses Kraftübertragungsglieds in die Aufnahmehülse kann die Stützeinrichtung ebenso wie der Gelenkkopf das Schnappelement hintergreifen. Das Schnappelement kann sich dann mittels der Stützeinrichtung beispielsweise an der Aufnahmehülse oder an demjenigen Kraftübertragungsglied, an welchem die Aufnahmehülse ausgebildet ist, abstützen. Die Stützeinrichtung kann innerhalb der Aufnahmehülse an einem Anschlag oder einer Schräge anliegen und von einem elastisch ausgebildeten Schnappelement gegen die Aufnahmehülse oder das Kraftübertragungsglied, an welcher die Aufnahmehülse ausgebildet ist, vorgespannt sein. Die Stützeinrichtung ist in diesem Fall nach dem Ausbilden der Schnellverbindung zwischen den beiden Kraftübertragungsgliedern innerhalb der Aufnahmehülse in axialer Richtung fixiert und schwenk- und drehfest mit der Stützeinrichtung verbunden.

Die Stützeinrichtung kann unterschiedlich ausgestaltet sein. So ist es gemäß einer ersten Ausführungsform möglich, eine ringförmige Stützeinrichtung vorzusehen, welche drehbar und schwenkbar auf dem in die Aufnahmehülse einzuführenden Kraftübertragungsglied gelagert ist und sich in Anlage mit dem Gelenkkopf befinden kann. Vorzugsweise umfasst die ringförmige Stützeinrichtung auf ihrer dem Gelenkkopf zugewandten Seite eine Lagerfläche für den Gelenkkopf. Nach dem Einführen des Kraftübertragungsglieds in die Aufnahmehülse kann die ringförmige Stützeinrichtung an einer Stufe innerhalb der Aufnahmehülse anliegen. Gemäß einer weiteren, bevorzugten Ausführungsform umgreift die Stützeinrichtung den Gelenkkopf zumindest bereichsweise und ist relativ zu diesem schwenkbar. Auch in diesem Fall kann die Stützeinrichtung nach Art einer Gelenkpfanne zusätzlich als Lager für den Gelenkkopf fungieren. Eine Gelenkpfanne zur Lagerung des Gelenkkopfs kann auch einstückig mit der Aufnahmehülse oder dem Kraftübertragungsglied, an welchem die Aufnahmehülse ausgebildet ist, ausgestaltet sein. So kann der Grund der Aufnahmehülse die Gestalt einer Gelenkpfanne aufweisen.

Wenn das Gelenk mittels eines Gelenkkopfs und einer dazu komplementären Gelenkpfanne realisiert wird, ist der Gelenkkopf zweckmäßigerweise ein Kugelkopf, welcher in einer kalottenförmigen Gelenkpfanne gelagert ist. Anstatt einer Gelenkpfanne können auch andere Lager wie beispielsweise Bolzen, welche sich durch korrespondierende Öffnungen des Gelenkkopfs und der Aufnahmehülse erstrecken, verwendet werden. Gemäß dem Aspekt einer Schnellverbindung ist die Lagerung in einer Gelenkpfanne jedoch bevorzugt.

Die Stützeinrichtung kann ein- oder mehrteilig ausgebildet sein. Sie kann beispielsweise zwei den Gelenkkopf umgreifende Halbschalen aufweisen. Vorzugsweise ist eine den Gelenkkopf umgreifende Stützeinrichtung derart ausgestaltet, dass der Gelenkkopf in jedem Betriebszustand der Kraftübertragungsanordnung ein gewisses Spiel innerhalb der Stützeinrichtung aufweist. Der Gelenkkopf ist innerhalb der Stützeinrichtung dann frei schwenkbar.

Die einzelnen Teile wie beispielsweise Halbschalen der Stützeinrichtung können mittels eines oder mehrerer biegsamer Stege miteinander verbunden sein. Eine derartige Ausgestaltung der Stützeinrichtung gewährleistet eine einfache Montage.

Der Grund der Aufnahmehülse kann einen sich in Betätigungsrichtung des Pedals konisch verjüngenden Innendurchmesser aufweisen. Vorzugsweise besitzt bei einer derartigen Ausgestaltung der Aufnahmehülse die Stützeinrichtung einen dazu komplementären und sich in Betätigungsrichtung des Pedals konisch verjüngenden Außendurchmesser. Eine solche Ausgestaltung der Aufnahmehülse und der Stützeinrichtung gewährleistet eine Selbstzentrierung der Stützeinrichtung, wenn diese zusammen mit dem den Gelenkkopf tragenden Kraftübertragungsglied in die Aufnahmehülse eingeführt wird. Außerdem kann mittels einer derartigen Formgebung von Aufnahmehülse und Stützeinrichtung im Fall einer mehrteiligen Stützeinrichtung gewährleistet werden, dass die einzelnen Teile der Stützeinrichtung automatisch relativ zueinander fixiert werden. Zusätzlich können zur Fixierung einer mehrteiligen und den Gelenkkopf umgreifenden Stützeinrichtung einer oder mehrere Halteringe vorgesehen werden, welche z.B. ein Lösen der Stützeinrichtung vom Gelenkkopf verhindern.

Das Schnappelement kann auf verschiedene Art und Weise realisiert werden. Gemäß einer bevorzugten Ausführungsform ist eine Schnappeinrichtung in Form einer Federhülse vorhanden, welche als Schnappelement mindestens ein Federelement besitzt. Die Federhülse kann ein, zwei oder mehr mit der Stützeinrichtung zusammenwirkende Federelemente umfassen, welche das in der Aufnahmehülse angeordnete Kraftübertragungsglied radial außen umgeben. Zweckmäßigerweise sind die einzelnen Federelemente durch sich im wesentlichen in axialer Richtung erstreckende Schlitze voneinander getrennt.

Gemäß einer besonders bevorzugten Ausführungsform der Erfindung wirkt jedes Federelement über ein radial nach außen federelastisch betätigbares, freies Ende mit einer an der Stützeinrichtung ausgebildeten Schrägfläche zusammen. Diese Schrägfläche kann eine in Betätigungsrichtung des Pedals zunehmende radial Erstreckung aufweisen. Vorzugsweise ist die Schrägfläche der Stützeinrichtung bezüglich jedes Federelements derart geneigt angeordnet, dass das freie Ende des Federelements ungefähr senkrecht in die Schrägfläche mündet. Bei einer derartigen Anordnung ist die Krafteinleitung von der Schrägfläche in das Federelement und umgekehrt optimal, d.h. das Federelement stellt der Stützeinrichtung bzw. dem mit der Stützeinrichtung gekoppelten Kraftübertragungsglied eine maximale Kraft entgegen.

Die beispielsweise konisch ausgebildete Schrägfläche hat den weiteren Vorteil, dass je nach tatsächlicher Lage und Größe der an der Schnellverbindung beteiligten Bauteile die Schnappelemente tiefer und höher an der Schräge angreifen können. In allen möglichen Toleranzfällen ist daher eine spielfreie Verbindung zwischen den Federelementen und der Rasteinrichtung gewährleistet.

Die Federhülse kann einen sich über die gesamte Länge der Federhülse erstreckenden Axialschlitz sowie einen sich radial nach außen erstreckenden Rastkragen aufweisen. Der Axialschlitz gestattet eine elastische Durchmesserverringerung des Rastkragens, so dass dieser mit einer radial innen an der Aufnahmehülse ausgebildeten Nut zur Befestigung der Federhülse innerhalb der Aufnahmehülse zusammenwirken kann.

Ein bevorzugtes Ausführungsbeispiel einer erfindungsgemäßen Bremsanlage wird im folgenden anhand der beigefügten, schematischen Zeichnungen näher erläutert. Es zeigt:
- Fig. 1: einen Längsschnitt durch eine erfindungsgemäße elektrohydraulische Bremsanlage mit erfindungsgemäßer Kraftübertragungsanordnung;
- Fig. 2: einen vergrößerten Längsschnitt durch die in Fig. 1 dargestellte, erfindungsgemäße Kraftübertragungsanordnung;
- Fig. 3: eine räumliche Darstellung eines Ausschnitts der Kraftübertragungsanordnung gemäß Fig. 2;
- Fig. 4 und 5: Einzelteile der in den Fig. 1 bis 3 dargestellten Stützeinrichtung.

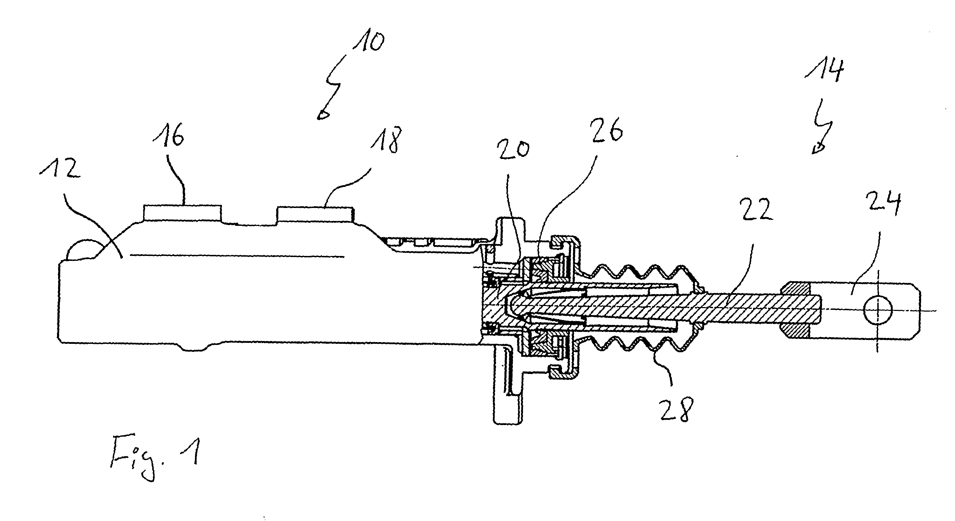

In Fig. 1 ist eine Bremsdruckgebereinheit 10 einer elektrohydraulischen Fahrzeugbremseanlage dargestellt. Die Bremsdruckgebereinheit 10 umfasst ein Gehäuse 12 und eine in das Gehäuse 12 ragende Kraftübertragungsanordnung 14. Das Gehäuse 12 besitzt zwei Anschlüsse 16 und 18 für ein in Fig. 1 nicht dargestelltes Fluidreservoir und mindestens einen weiteren Anschluss, in Fig. 1 nicht dargestellt, zur hydraulischen Verbindung der Bremsdruckgebereinheit 10 mit den jeweiligen Radbremsen des Kraftfahrzeugs.

Die bereichsweise innerhalb des Gehäuses 12 angeordnete Kraftübertragungsanordnung 14 umfasst ein erstes Kraftübertragungsglied in Gestalt eines Eingangsglieds 20 zur Betätigung der Bremsdruckgebereinheit 10. Die Kraftübertragungsanordnung 10 besitzt weiterhin ein starr mit dem Eingangsglied 20 gekoppeltes, zweites Kraftübertragungsglied in Gestalt einer Betätigungsstange 22. Die Betätigungsstange 22 weist an ihrem der Bremsdruckgebereinheit 10 abgewandten Ende einen Gabelkopf 24 auf. Der Gabelkopf 24 dient zur Kopplung der Betätigungsstange 22 mit einem in Fig. 1 nicht dargestellten Bremspedal. Während einer Betätigung des Bremspedals bewegt sich die Kraftübertragungsanordnung 14 in Fig. 1 nach links.

Das Gehäuse 12 ist an seinem der Kraftübertragungsanordnung 14 zugewandten Ende von einem ringförmigen Dichtungselement 26 verschlossen und die Kraftübertragungsanordnung 14 erstreckt sich dichtend durch eine zentrale Öffnung des ringförmigen Dichtungselements 26. Ein im wesentlichen hohlzylindrischer Schutzbalg 28 ist mit seinem einen Ende an der Betätigungsstange 22 befestigt und mit seinem anderen Ende mit dem Gehäuse 12 verbunden. Des Schutzbalg 28 schützt das Dichtungselement 26 vor Staub, Feuchtigkeit und anderen äußeren Einflüssen.

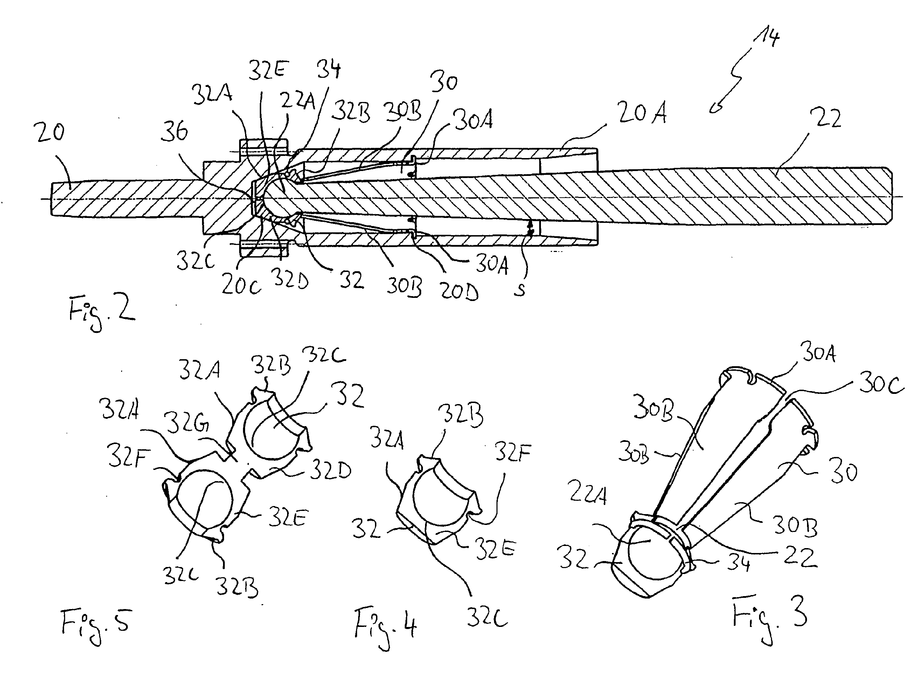

Der Aufbau der Kraftübertragungsanordnung 14 ist in Fig. 2 in einem vergrößertem Längsschnitt skizziert. Wie sich aus Fig. 2 ergibt geht das Eingangsglied 20 an seinem der Betätigungsstange 22 zugewandten Ende in eine im Ausführungsbeispiel einstückig mit dem Eingangsglied 20 ausgestaltete Aufnahmehülse 20A über. Die Aufnahmehülse 20A besitzt eine sich in axialer Richtung erstreckende, zentrale Öffnung in Gestalt einer Sacklochbohrung 20B. Die Sacklochbohrung 20B ist im Bohrungsgrund 20C konisch bzw. kegelförmig ausgeführt, wobei der Innendurchmesser in Betätigungsrichtung der Betätigungsstange abnimmt.

Ungefähr in der Mitte der Aufnahmehülse 20A besitzt diese radial innen eine in Umfangsrichtung umlaufende Nut 20D zur rastenden Anbindung einer Schnappeinrichtung. Im Ausführungsbeispiel ist die Schnappeinrichtung als Federhülse 30 ausgestaltet. Die Federhülse 30 ist ein im wesentlichen rotationssymmetrisches Blechformteil.

Wie sich aus Fig. 3 ergibt, besitzt die Federhülse 30 an ihrem einen Ende einen sich radial nach außen erstreckenden Rastkragen 30A sowie an ihrem gegenüberliegenden Ende vier sich in axialer Richtung erstreckende und radial nach innen gebogene, zungenförmige Federelemente 30B. Die Federelemente 30B fungieren, wie weiter unten ausführlicher beschrieben wird, als Schnappelemente.

Die Federhülse 30 besitzt außerdem einen Axialschlitz 30C, welcher eine elastische Durchmesserverringerung der Federhülse 30 und damit auch des Rastkragens 30A gestattet. Zur Befestigung der Federhülse 30 in der in Fig. 2 dargestellten Rastposition wird der Durchmesser der Federhülse 30 zunächst verringert und die Federhülse 30 mit verringertem Durchmesser in die Sacklochbohrung 20B der Aufnahmehülse 20A eingeführt. Sobald die axiale Position des Rastkragens 30A der Federhülse 30 mit der axialen Position der innerhalb der Aufnahmehülse 20A angeordneten Rastnut 20D übereinstimmt, dehnt sich die elastisch verformte Federhülse 30 radial nach außen und drängt den Rastkragen 30A in die Rastnut 20D. Nach dem Einrasten des Rastkragens 30A der Federhülse 30 in der Rastnut 20D der Aufnahmehülse 20A ist die Federhülse 30 innerhalb der Aufnahmehülse 20A axial unbeweglich montiert.

Die Betätigungsstange 22 der Kraftübertragungsanordnung 14 gemäß Fig. 2 besitzt an ihrem dem Eingangsglied 20 zugewandten Ende einen Gelenkkopf 22A. Der Außendurchmesser der Betätigungsstange 22 ist deutlich geringer als der Innendurchmesser der Aufnahmehülse 20A. Das zwischen dem Außendurchmesser der Betätigungsstange 22 und dem Innendurchmesser der Aufnahmehülse 20A bestehende Spiel s gestattet eine Winkelauslenkung der Betätigungsstange 22 relativ zum Eingangsglied 20.

Die Kraftübertragungsanordnung 14 gemäß Fig. 2 umfasst weiterhin eine Stützeinrichtung 32 in Gestalt einer den Gelenkkopf 22A der Betätigungsstange 22 radial außen umgebenden Gelenkkappe. Die Stützeinrichtung 32 besitzt eine vordere, dem Eingangsglied 20 zugewandte konische Außenfläche 32A mit in Richtung auf das Eingangsglied 20 abnehmendem Außendurchmesser sowie eine hintere, dem Bremspedal zugewandte konische Außenfläche 32B mit in Richtung auf das Eingangsglied zunehmendem Außendurchmesser. Die Federelemente 30B befinden sich in Anlage mit der von der hinteren konischen Außenfläche 32B der Stützeinrichtung 32 gebildeten Schrägfläche und drängen die Stützeinrichtung 32 in Richtung auf das Eingangsglied 20. Je nach den Bauteiltoleranzen liegen die Federelemente 30B höher oder tiefer an der von dem hinteren konischen Außendurchmesser 32B gebildeten Halteschräge an. Unabhängig von den Bauteiltoleranzen kann somit eine spielfreie Verbindung zwischen jedem der Federelemente 30B und der Stützeinrichtung 32 erzielt werden. Die Federelemente 30B der Federhülse spannen die Stützeinrichtung 32 in Betätigungsrichtung der Betätigungsstange 22 gegen den Bohrungsgrund 20C der Sacklochbohrung 20B vor. Die vordere konische Außenfläche 32A der Stützeinrichtung 32 liegt daher im kegelförmigen Bohrungsgrund 20C der Sacklochbohrung 20B an.

Der kalottenförmige Innenraum der Stützeinrichtung 32, in welcher der Gelenkkopf 22A der Betätigungsstange 22 aufgenommen ist, bildet eine Gelenkpfanne 32C für den Gelenkkopf 22A. Der Außendurchmesser des Gelenkkopfs 22A ist etwas geringer als der Innendurchmesser des kalottenförmigen Innenraums der Stützeinrichtung 32. Dies hat zur Folge, dass der Gelenkkopf 22A innerhalb der Gelenkpfanne 32C frei schwenkbar gelagert ist. Im Gegensatz zum Gelenkkopf 22A ist die Stützeinrichtung 32 schwenkfest innerhalb der Sacklochbohrung 20B angeordnet. Eine Schwenkbewegung der Betätigungsstange 22 relativ zum Eingangsglied 20 kann sich nicht auf die Stützeinrichtung 32 übertragen. Aus diesem Grund bleiben auch die Federelemente 30B der Federhülse 30 bei einer Schwenkbewegung ortsfest. Ermüdungsbrüche der Federelemente 30B infolge einer Schwenkbewegung der Betätigungsstange 22 treten daher bei der erfindungsgemäßen Kraftübertragungsanordnung 14 nicht auf.

Die Stützeinrichtung 32 besteht aus zwei den Gelenkkopf 22A der Betätigungsstange 22 umgreifenden Halbschalen 32D, 32E, welche von einem Haltering 34 zusammengehalten werden. Die zweiteilige Ausgestaltung der Stützeinrichtung 32 gestattet eine vereinfachte Montage. Durch das Zusammenwirken der konischen Innenfläche des Bohrungsgrunds 20C und der vorderen konischen Außenfläche 32A der Stützeinrichtung 32 ist gewährleistet, dass die beiden Halbschalen 32D, 32E der Stützeinrichtung 32 zwangsweise zusammengehalten werden. Damit wird die Funktion des Halterings 34 übernommen.

In Fig. 3 ist in einer räumlichen Darstellung die Anordnung von Federhülse 30, Gelenkkopf 22A und Stützeinrichtung 32 nochmals exemplarisch dargestellt. In Fig. 4 ist eine der beiden Halbschalen 32E der Stützeinrichtung 32 abgebildet. Deutlich zu erkennen ist der kalottenförmige Innenraum der Halbschale. Weiterhin zu erkennen ist eine radial außen in Umfangsrichtung verlaufende Nut 32F zur Aufnahme des Halterings 34. Abweichend von Fig. 4 können die beiden Halbschalen 32D, 32E der Stützvorrichtung 32 auch einstückig ausgebildet und mit einem Verbindungssteg 32G verbunden werden. Eine derartige Ausgestaltung der Stützeinrichtung vereinfacht die Montage, da die beiden Halbschalen 32D, 32E zum Zweck des Umgreifens des Gelenkkopfs 22A lediglich zusammengeklappt werden müssen. Der Querschnitt des Verbindungsstegs 32G ist so gewählt, dass er einer Biegung keinen nennenswerten Widerstand entgegenstellt. Werden mit einem Verbindungssteg 32G versehene Stützeinrichtungen 32 verwendet, ist der Bohrungsgrund 20C der Sacklochbohrung 20B derart ausgestaltet, dass auch noch nach Aufnahme der Stützeinrichtung 32 ein gewisser Freiraum 36 zur Aufnahme des gebogenen Verbindungsstegs 32G vorhanden ist.

Zur Montage der in Fig. 2 dargestellten Kraftübertragungsanordnung 14 wird zunächst, wie vorstehend bereits erläutert, die Federhülse 30 innerhalb der Aufnahmehülse 20A verankert. Im Anschluss daran wird die Stützeinrichtung 32 dreh- bzw. schwenkbar und axial unverschieblich mit dem Gelenkkopf 22A der Betätigungsstange 22 verbunden. Gemäß dem Ausführungsbeispiel geschieht dies durch das Umgreifen des Gelenkkopfs 22A mittels zweier Halbschalen 32D, 32E, welche im Anschluss daran mit Hilfe eines Halterings 34 relativ zueinander fixiert werden.

Nach Montage der Stützeinrichtung 32 am Gelenkkopf 22A wird die Betätigungsstange 22 mit aufgesetzter Stützeinrichtung 32 in die Sacklochbohrung 20B eingeführt. Dabei werden die Federelemente 30B der Federhülse 30 elastisch radial nach außen gebogen, bis die vordere konische Außenfläche 32A der Stützeinrichtung 32 die Federelemente 30B passiert hat. Im Anschluss daran schnappen die Federelemente 30B radial nach innen zurück und drängen die Gelenkkappe 32 in Anlage an den konischen Grund 20C der Sacklochbohrung 20B. Gleichzeitig gelangen die Federelemente 30B in Anlage an die Halteschräge der hinteren konischen Außenfläche 32B der Stützeinrichtung 32. Nach dem Zurückschnappen der Federelemente 30B ist eine dauerfeste Schnellverbindung zwischen der Betätigungsstange 22 und dem Eingangsglied 20 gewährleistet. Gleichzeitig wird mittels des Gelenkkopfs 22A der Betätigungsstange 22 und der innerhalb der Stützeinrichtung 32 ausgebildeten Gelenkpfanne 32C eine Gelenkfunktion realisiert. Die drehfeste Verankerung der Stützeinrichtung 32, welche eine Halteschräge für die elastischen Federelemente 30B zur Verfügung stellt, verhindert Materialermüdungen im Bereich der Federhülse.

Obwohl das vorstehende Ausführungsbeispiel im Zusammenhang mit einer elektrohydraulischen Bremsanlage beschrieben wurde, lässt sich die erfindungsgemäße Kraftübertragungsanordnung gemäß Fig. 2 auch zur Betätigung beispielsweise eines Bremskraftverstärkers einsetzten.

## Patentansprüche

1. Kraftübertragungsanordnung (14) mit Gelenkfunktion zur Aufnahme und Weiterleitung einer Pedalkraft, insbesondere einer Bremspedalkraft, mit einem ersten Kraftübertragungsglied (20), welches eine Aufnahmehülse (20A) für ein zweites Kraftübertragungsglied (22) aufweist, wobei ein in die Aufnahmehülse ragendes Ende des zweiten Kraftübertragungsglieds (22) mindestens ein Schnappelement (30B) hintergreift, welches das zweite Kraftübertragungsglied (22) gegen ein Herausziehen aus der Aufnahmehülse (20A) sichert, **dadurch gekennzeichnet, dass** das das Schnappelement (30B) hintergreifende Ende des zweiten Kraftübertragungsglieds (22) ein Gelenkkopf (22A) ist, der innerhalb der Aufnahmehülse (20A) schwenkbar gelagert ist, wobei das zweite Kraftübertragungsglied (22) mit einer Stützeinrichtung (32) schwenkbar gekoppelt ist, an welcher sich die Schnappeinrichtung (30) schwenkfest abstützt.

2. Kraftübertragungsanordnung nach Anspruch 1, **dadurch gekennzeichnet, dass**
das Schnappelement (30B) die Stützeinrichtung (32) gegen die Aufnahmehülse (20A) oder das erste Kraftübertragungsglied (20) vorspannt.

3. Kraftübertragungsanordnung nach Anspruch 1 oder 2, **dadurch gekennzeichnet, dass**
die Stützeinrichtung (32) den Gelenkkopf (22A) zumindest bereichsweise umgreift.

4. Kraftübertragungsanordnung nach einem der Ansprüche 1 bis 3, **dadurch gekennzeichnet, dass**
der Gelenkkopf (22A) in einer Gelenkpfanne (32C) gelagert ist.

5. Kraftübertragungsanordnung nach Anspruch 4, **dadurch gekennzeichnet, dass**
der Gelenkkopf (22A) ein Kugelkopf ist und die Gelenkpfanne (32C) kalottenförmig ausgestaltet ist.

6. Kraftübertragungsanordnung nach Anspruch 4 oder 5, **dadurch gekennzeichnet, dass**
die Gelenkpfanne einstückig mit der Aufnahmehülse (20A) ausgestaltet ist.

7. Kraftübertragungsanordnung nach Anspruch 4 oder 5, **dadurch gekennzeichnet, dass**
die Gelenkpfanne (32C) von der Stützeinrichtung (32) gebildet ist.

8. Kraftübertragungsanordnung nach einem der Ansprüche 1 bis 7, **dadurch gekennzeichnet, dass**
die Stützeinrichtung (32) mehrteilig ausgebildet ist.

9. Kraftübertragungsanordnung nach Anspruch 8, **dadurch gekennzeichnet, dass**
die Stützeinrichtung (32) zwei den Gelenkkopf (22A) umgreifende Halbschalen (32D, 32E) aufweist.

10. Kraftübertragungsanordnung nach Anspruch 8 oder 9, **dadurch gekennzeichnet, dass**
die einzelnen Teile oder Halbschalen (32D, 32E) der Stützeinrichtung (32) mittels mindestens eines biegsamen Stegs (32G) miteinander verbunden sind.

11. Kraftübertragungsanordnung nach einem der Ansprüche 1 bis 10, **dadurch gekennzeichnet, dass**
ein Grund (20C) der Aufnahmehülse (20A) einen sich in Betätigungsrichtung des zweiten Kraftübertragungsglieds (22) konisch verjüngenden Innendurchmesser aufweist.

12. Kraftübertragungsanordnung nach einem der Ansprüche 1 bis 11, **dadurch gekennzeichnet, dass**
das Stützelement (32) einen sich in Betätigungsrichtung des zweiten Kraftübertragungsglieds (22) konisch verjüngenden Außendurchmesser aufweist.

13. Kraftübertragungsanordnung nach einem der Ansprüche 8 bis 12, **dadurch gekennzeichnet, dass**
die einzelnen Teile oder Halbschalen (32D, 32E) der Stützeinrichtung mittels eines oder mehrerer Halteringe (34) relativ zueinander fixiert sind.

14. Kraftübertragungsanordnung nach einem der Ansprüche 1 bis 13, **dadurch gekennzeichnet, dass**
das mindestens eine Schnappelement ein Federelement (30B) ist.

15. Kraftübertragungsanordnung nach Anspruch 14, **dadurch gekennzeichnet, dass**
das Federelement (30B) Teil einer innerhalb der Aufnahmehülse (20A) aufgenommenen Federhülse (30) ist.

16. Kraftübertragungsanordnung nach Anspruch 15, **dadurch gekennzeichnet, dass**
die Stützeinrichtung (32) eine Halteschräge (32B) aufweist und mittels dieser Halteschräge (32B) mit dem Federelement (30C) zusammenwirkt.

17. Bremsanlage mit einer Kraftübertragungsanordnung (14) nach einem der Ansprüche 1 bis 16, einem Eingangsglied (22) zur Betätigung einer Bremseinrichtung (10) der Bremsanlage und einer mit einem Bremspedal zu koppelnden Betätigungsstange (22), wobei das Eingangsglied (20) von einem ersten der beiden Kraftübertragungsglieder und die Betätigungsstange (22) von einem zweiten der beiden Kraftübertragungsglieder gebildet ist.

18. Bremsanlage nach Anspruch 17, **dadurch gekennzeichnet, dass**
die Bremsanlage eine elektrohydraulische Bremsanlage und die Bremseinrichtung eine Bremsdruckgebereinheit (10) ist.

19. Bremsanlage nach Anspruch 17, **dadurch gekennzeichnet, dass**
die Bremseinrichtung ein Bremskraftverstärker ist.

## Claims

1. A load-transmitting arrangement (14) with articulated function for taking up and transmitting a pedal force, in particular a brake pedal force, comprising a first load-transmitting member (20), which has a receiving sleeve (20A) for a second load-transmitting member (22), wherein an end of the second load-transmitting member (22) that projects into the receiving sleeve engages behind at least one snap element (30B), which locks the second load-transmitting member (22) against withdrawal from the receiving sleeve (20A), **characterized in that** the end of the second load-transmitting member (22) that engages behind the snap element (30B) is a joint head (22A), which is supported pivotally inside the receiving sleeve (20A), the second load-transmitting member (22) being coupled pivotally to a support device (32), against which the snap device (30) is non-pivotally supported.

2. The load-transmitting arrangement according to claim 1, **characterized in that** the snap element (30B) biases the support device (32) towards the receiving sleeve (20A) or the first load-transmitting member (20).

3. The load-transmitting arrangement according to claim 1 or 2, **characterized in that** the support device (32) embraces the joint head (22A) at least in sections.

4. The load-transmitting arrangement according to one of claims 1 to 3, **characterized in that** the joint head (22A) is supported in a joint socket (32C).

5. The load-transmitting arrangement according to claim 4, **characterized in that** the joint head (22A) is a ball head and the joint socket (32C) is of a cup-shaped design.

6. The load-transmitting arrangement according to claim 4 or 5, **characterized in that** the joint socket is constructed integrally with the receiving sleeve (20A).

7. The load-transmitting arrangement according to claim 4 or 5, **characterized in that** the joint socket (32C) is formed by the support device (32).

8. The load-transmitting arrangement according to one of claims 1 to 7, **characterized in that** the support device (32) is of a multi-part design.

9. The load-transmitting arrangement according to claim 8, **characterized in that** the support device (32) comprises two half-shells (32D, 32E), which embrace the joint head (22A).

10. The load-transmitting arrangement according to claim 8 or 9, **characterized in that** the individual parts or half-shells (32D, 32E) of the support device (32) are connected to one another by means of at least one flexible web (32G).

11. The load-transmitting arrangement according to one of claims 1 to 10, **characterized in that** a base (20C) of the receiving sleeve (20A) has an inside diameter tapering in the direction of actuation of the second load-transmitting member (22).

12. The load-transmitting arrangement according to one of claims 1 to 11, **characterized in that** the support element (32) has an outside diameter tapering in the direction of actuation of the second load-transmitting member (22).

13. The load-transmitting arrangement according to one of claims 8 to 12, **characterized in that** the individual parts or half-shells (32D, 32E) of the support device are fixed relative to one another by means of one or more retaining rings (34).

14. The load-transmitting arrangement according to one of claims 1 to 13, **characterized in that** the at least one snap element is a spring element (30B).

15. The load-transmitting arrangement according to claim 14, **characterized in that** the spring element (30B) is part of a spring sleeve (30) accommodated inside the receiving sleeve (20A).

16. The load-transmitting arrangement according to claim 15, **characterized in that** the support device (32) has a retaining slope (32B) and by means of said retaining slope (32B) interacts with the spring element (30C).

17. A brake system having a load-transmitting arrangement (14) according to one of claims 1 to 16, an input member (22) for actuating a braking device (10) of the brake system, and an actuating rod (22) to be coupled to a brake pedal, the input member (20) being formed by the first of the two load-transmitting members and the actuating rod (22) being formed by the second of the two load-transmitting members.

18. The brake system according to claim 17, **characterized in that** the brake system is an electrohydraulic brake system and the braking device is a brake-pressure generating unit (10).

19. The brake system according to claim 17, **characterized in that** the braking device is a brake booster.

## Revendications

1. Dispositif de transmission de force (14) présentant une fonction d'articulation, destiné à recevoir et à transmettre une force de pédale, notamment une force de pédale de frein, et comportant un premier élément de transmission de force (20) lequel présente une douille de réception (20A) pour un deuxième élément de transmission de force (22), une extrémité du deuxième élément de transmission de force (22) qui fait saillie dans la douille de réception entrant en prise par l'arrière avec au moins un élément de prise (30B) lequel sécurise le deuxième élément de transmission de force (22) contre son retrait de la douille de réception (20A), **caractérisé en ce que** l'extrémité du deuxième élément de transmission de force (22) entrant en prise par l'arrière avec l'élément de prise (30B) se présente sous la forme d'une tête d'articulation (22A) logée à pivotement à l'intérieur de la douille de réception (20A), le deuxième élément de transmission de force (22) étant couplé de manière à pouvoir pivoter avec un dispositif d'appui (32) sur lequel l'élément de prise (30B) prend appui de manière immobile en pivotement.

2. Dispositif de transmission de force selon la revendication 1, **caractérisé en ce que**
le dispositif d'appui (32) est précontraint par l'élément de prise (30B) contre la douille de réception (20A) ou le premier élément de transmission de force (20).

3. Dispositif de transmission de force selon la revendication 1 ou 2, **caractérisé en ce que**
le dispositif d'appui (32) entoure pour le moins partiellement la tête d'articulation (22A).

4. Dispositif de transmission de force selon l'une des revendications 1 à 3, **caractérisé en ce que**
la tête d'articulation (22A) est logée à l'intérieur d'une cavité articulaire (32C).

5. Dispositif de transmission de force selon la revendication 4, **caractérisé en ce que**
la tête d'articulation (22A) se présente sous la forme d'une tête sphérique, et la cavité articulaire (32C), sous la forme d'une calotte.

6. Dispositif de transmission de force selon la revendication 4 ou 5, **caractérisé en ce que**
la cavité articulaire est réalisée d'une seule pièce avec la douille de réception (20A).

7. Dispositif de transmission de force selon la revendication 4 ou 5, **caractérisé en ce que**
la cavité articulaire (32C) est formée par le dispositif d'appui (32).

8. Dispositif de transmission de force selon l'une des revendications 1 à 7, **caractérisé en ce que**
le dispositif d'appui (32) est réalisé en plusieurs parties.

9. Dispositif de transmission de force selon la revendication 8, **caractérisé en ce que**
le dispositif d'appui (32) présente deux demi-coques (32D, 32E) entourant la tête d'articulation (22A).

10. Dispositif de transmission de force selon la revendication 8 ou 9, **caractérisé en ce que**
les différentes parties ou les demi-coques (32D, 32E) du dispositif d'appui (32) sont reliées les unes aux autres par au moins une branche souple (32G).

11. Dispositif de transmission de force selon l'une des revendications 1 à 10, **caractérisé en ce que**
un fond (20C) de la douille de réception (20A) présente un diamètre intérieur allant en se rétrécissant de manière conique dans la direction d'actionnement du deuxième élément de transmission de force (22).

12. Dispositif de transmission de force selon l'une des revendications 1 à 11, **caractérisé en ce que**
le dispositif d'appui (32) présente un diamètre extérieur allant en se rétrécissant de manière conique dans la direction d'actionnement du deuxième élément de transmission de force (22).

13. Dispositif de transmission de force selon l'une des revendications 8 à 12, **caractérisé en ce que**
les différentes parties ou les demi-coques (32D, 32E) du dispositif d'appui (32) sont fixées les unes par rapport aux autres par une ou plusieurs bagues de maintien (34).

14. Dispositif de transmission de force selon l'une des revendications 1 à 13, **caractérisé en ce que**
ledit élément de prise se présente sous la forme d'un élément de ressort (30B).

15. Dispositif de transmission de force selon la revendication 14, **caractérisé en ce que**
l'élément de ressort (30B) fait partie intégrante d'une douille à ressort (30) logée à l'intérieur de la douille de réception (20A).

16. Dispositif de transmission de force selon la revendication 15, **caractérisé en ce que**
le dispositif d'appui (32) présente un chanfrein de maintien (32B) et coopère avec l'élément de ressort (30C) par l'intermédiaire dudit chanfrein de maintien (32B).

17. Système de freinage comprenant un dispositif de transmission de force (14) selon l'une des revendications 1 à 16, un élément d'entrée (22) permettant d'actionner un dispositif de freinage (10) du système de freinage et une tige d'actionnement (22) à coupler avec une pédale de frein, l'élément d'entrée (20) étant formé par un premier des deux éléments de transmission de force, et la tige d'actionnement (22), par un deuxième des deux éléments de transmission de force.

18. Système de freinage selon la revendication 17, **caractérisé en ce que**
le système de freinage se présente sous la forme d'un système de freinage hydraulique, et le dispositif de freinage, sous la forme d'une unité d'alimentation en pression de freinage (10).

19. Système de freinage selon la revendication 17, **caractérisé en ce que**
le dispositif de freinage se présente sous la forme d'un amplificateur de freinage.
